# EUROPÄISCHE PATENTSCHRIFT

(11) **EP 2 781 699 B1**
(45) Veröffentlichungstag und Bekanntmachung des Hinweises auf die Patenterteilung: **02.05.2018**
(21) Anmeldenummer: 14160480.1
(22) Anmeldetag: 18.03.2014
(51) Int. Cl.: F01D 25/00, F02C 6/12

(54) **Reinigungsvorrichtung einer Abgasturbine**
Cleaning device of an exhaust gas turbine
Dispositif de nettoyage d'une turbine à gaz d'échappement

(30) Priorität: 19.03.2013 EP 13160002
(43) Veröffentlichungstag der Anmeldung: 24.09.2014
(73) Patentinhaber: ABB Turbo Systems AG, 5400 Baden (CH)
(72) Erfinder: Fischer, Magnus, 8045 Zürich (CH); Probst, Reiner, DE-79809 Nöggenschwiel (DE); Rechin, Thomas, CH-5400 Baden (CH)
(74) Vertreter: ABB Patent Attorneys

(56) Entgegenhaltungen:
- EP-A2- 0 848 150
- WO-A1-2005/049972
- DE-A1-102005 028 296

## Beschreibung

### Technisches Gebiet

Die Erfindung bezieht sich auf das Gebiet der mit Abgasen von Brennkraftmaschinen beaufschlagten Strömungsmaschinen. Sie betrifft eine Reinigungsvorrichtung einer Abgasturbine, eine Abgasturbine oder Nutzturbine mit einer derartigen Reinigungsvorrichtung sowie einen Abgasturbolader mit einer Abgasturbine mit einer derartigen Reinigungsvorrichtung.

Abgasturbinen werden in Abgasturboladern zum Aufladen von Brennkraftmaschinen oder als Nutzturbinen zum Umwandeln der in den Abgasen von Brennkraftmaschinen enthaltenen Energie in mechanische oder elektrische Energie eingesetzt.

In Abhängigkeit von der konkreten Betriebssituation der Brennkraftmaschine und der Zusammensetzung der zum Antrieb der Brennkraftmaschine verwendeten Brennstoffe, kommt es in der Abgasturbine früher oder später zu einer Verschmutzung der Turbinenstufe, also der Turbinenschaufeln am Laufrad und der Leitschaufeln des Düsenringes, sowie der verschiedenen Turbinengehäuseteile. Solche Schmutzablagerungen können im Bereich des Düsenrings zu einem schlechteren Turbinenwirkungsgrad führen und demzufolge eine Verringerung der Leistung der nachfolgenden Maschinen, beispielsweise des mittels Abgasturbine angetriebenen Verdichters und der aufgeladenen Brennkraftmaschine selbst, bewirken. Als Folge dessen kann es zu einer Erhöhung der Abgastemperaturen im Brennraum kommen, wodurch sowohl die Brennkraftmaschine als auch der Turbolader thermisch überbeansprucht werden können. Bei der Brennkraftmaschine kann insbesondere eine Beschädigung oder gar Zerstörung der Auslassventile auftreten.

Lagert sich auf dem Düsenring und auf den Turbinenschaufeln eines mit einer ViertaktBrennkraftmaschine verbundenen Turboladers eine Schmutzschicht ab, so ist ausserdem mit einem Ansteigen der Turboladerdrehzahl und folglich des Ladedrucks und des Zylinderdrucks zu rechnen. Dadurch werden sowohl Bauteile der Brennkraftmaschine als auch des Turboladers zusätzlich zur erhöhten thermischen Belastung auch mechanisch höher beansprucht, was ebenfalls bis zur Zerstörung der betroffenen Bauteile führen kann.

Bei unregelmässiger Verteilung der Schmutzschicht am Umfang der Laufschaufeln des Turbinenrades kann es zu einer Erhöhung der Unwucht des Rotors kommen, wodurch auch die Lagerung der rotierenden Teile beschädigt werden kann.

Kommt es am Turbinengehäuse zu Schmutzablagerungen an der im Bereich radial ausserhalb der Turbinenschaufeln verlaufenden Aussenkontur des Strömungskanals, können aufgrund des reduzierten Radialspiels zwischen Turbinenschaufeln und Turbinengehäuse im Betrieb Berührung auftreten, welche die Turbinenschaufeln beschädigen und im Extremfall unbrauchbar machen können.

Deshalb müssen Düsenring, Turbinenschaufeln und betroffene Bereiche des Turbinengehäuses regelmässig während des Betriebes von ihnen anhaftenden Verschmutzungen befreit werden.

Für die Reinigung von Abgasturbinen mit Verschmutzungen aus mit Schweröl betriebenen Brennkraftmaschinen während des Betriebs wird als Reinigungsmittel hauptsächlich unbehandeltes Leitungswasser eingesetzt, welches über eine oder mehrere Düsen stromauf der Turbinenstufe in den Abgasstrom eingespritzt wird.

Eine Reinigungswirkung kann nur in den vom Reinigungsmittel benetzten Flächen der Abgasturbine erreicht werden. Für eine gute Reinigung muss demnach eine homogene Verteilung des Reinigungsmittels in der Kreis- oder Kreisringfläche am Eintritt zur Turbinenstufe realisiert werden.

### Stand der Technik

Das typischerweise radial angeströmte Gaseintrittsgehäuse einer Axialturbine überführt die Strömung von einem Kreisquerschnitt in einen Ringquerschnitt. Um eine ausreichende Reinigungswirkung - ausgedrückt durch eine ausreichende Benetzung mit Reinigungsmittel - an der Turbinenstufe zu erreichen sind verschiedene Konzepte teils hoher Komplexität entwickelt worden.

DE3515825A1 offenbart eine Vorrichtung zur Reinigung der Laufschaufeln und des Düsenrings der Axialturbine eines Abgasturboladers mit einem axialsymmetrischen Gaseintrittsgehäuse. Die Reinigungsvorrichtung besteht aus mehreren am Gaseintrittsgehäuse der Axialturbine angeordneten Injektoren mit bis in den Strömungskanal reichenden Düsen und einer Zuleitung für das Reinigungsmittel.

WO2006017952A1 offenbart eine Vorrichtung zur Reinigung der Laufschaufeln und des Düsenrings der Axialturbine eines Abgasturboladers, welche unabhängig von der Form des verwendeten Gaseintrittsgehäuses eingesetzt werden kann. Die Eindüsung des Reinigungsmittels erfolgt über unmittelbar stromauf des Turbineneintritts, auf dem Nabendurchmesser des Düsenrings angeordnete, wandbündige Düsen, wobei jeder Düsenringschaufel eine Düse zugeordnet ist.

EP848150B1 offenbart eine Vorrichtung zur Reinigung der Laufschaufeln und des Düsenrings der Axialturbine eines Abgasturboladers mit einem um 90° abgewinkelten Gaseintrittsgehäuse. Ein einzelner, zylindrischer Düsenkörper mit schlitzförmigen, am Umfang angeordneten Düsenöffnungen ist im Staupunkt der kalottenförmigen, inneren Gehäusewand angeordnet.

WO2005/049972A1 offenbart eine Vorrichtung zur Reinigung der Laufschaufeln und des Düsenrings der Axialturbine eines Abgasturboladers mit einer in den Strömungskanal hineinragenden, stabförmigen Düse. Durch stromab ausgerichtete Einspritzöffnungen wird das Reinigungsmittel mit der Strömung in Richtung Düsenring und Turbinenschaufeln eingespritzt.

EP2565391A1 offenbart eine vereinfachte Reinigungsvorrichtung mit einem einzelnen Düsenstab, die sich dadurch auszeichnet, dass mehrere Druckniveaus der Reinigungsflüssigkeit zur Verfügung stehen und die Düse an sich möglichst nahe am Staupunkt der Strömung zur Kalotte positioniert wird (siehe).

Wenn von aussen durch die Gehäusewand gesteckte Düsenkörper verwendet werden, muss die Eigenfrequenz des Düsenkörpers berücksichtigt werden. Je länger der Düsenkörper ist, desto geringer liegt die Eigenfrequenz. Eine hohe Eigenfrequenz ist erforderlich um eine turboladerdrehzahlfrequente Anregung, die zu einem potentiellen HCF-Schaden führt, zu vermeiden

Um eine möglichst hohe Eigenfrequenz zu erreichen muss vorzugsweise ein grosser Grundquerschnitt des Düsenkörpers eingesetzt werden. Dieser führt zu einer grossen Versperrung des Gaskanals und damit zu erhöhten Strömungsverlusten.

### Kurze Darstellung der Erfindung

Die Aufgabe der vorliegenden Erfindung besteht darin, den Anströmbereich einer radial angeströmten Axialturbine bezüglich der Nassreinigung zu optimieren.

Erfindungsgemäss wird dies erreicht, indem der Strömungskanal im Bereich einer Reinigungsdüse einen elliptischen Querschnitt aufweist, und die Reinigungsdüse in der kürzeren Symmetrieachse der Ellipse gelegen ist.

Dadurch lässt sich ein Minimum bezüglich der Düsenlänge erreichen und weiter kann die von aussen gesteckte Düse schwingsicher bei minimaler Versperrung realisiert werden.

Optional weist die Reinigungsdüse, die von aussen in das Gaseintrittsgehäuse gesteckt wird und in den Strömungskanal hineinragt, über der gesamten Länge verteilte, einzelne Düsenbohrungen auf.

Jede Düsenbohrung im Düsenkörper ist optional in einem spezifischem Winkel zur Achse des Düsenkörpers ausgerichtet und besitzt darüber hinaus einen spezifischen Öffnungsdurchmesser. Dabei werden die geometrischen Parameter, wie Durchmesser der Düsenbohrung, Winkellage und Winkellage des Düsenkörpers, mittels CFD-Simulation definiert um eine möglichst hohe Reinigungswirkung zu erzielen.

Die von aussen in das Gaseintrittsgehäuse gesteckte Reinigungsdüse lässt auch Bohrungen im Düsenkörper zu, die eine direkte Benetzung des Leitgitters zulassen ohne die Kalotte unnötig zu benetzen.

Weitere Vorteile ergeben sich aus den abhängigen Ansprüchen.

### Kurze Beschreibung der Zeichnungen

Anschliessend sind anhand der Zeichnungen Ausführungsformen des erfindungsgemäss ausgebildeten Gaseintrittsgehäuses erläutert. Hierbei zeigt
- Fig. 1: eine Ansicht eines teilweise aufgeschnittenen Abgasturboladers gemäss dem Stand der Technik, mit einer Axialturbine mit radialem Gaseintritt und einem Radialverdichter, und
- Fig. 2: einen entlang der Verlängerung der Achse geführten Schnitt durch das Gaseintrittsgehäuse der Axialturbine nach Fig. 1, mit einer erfindungsgemässen Reinigungsdüse, und
- Fig. 3: einen entlang III-III geführten Schnitt durch das Gaseintrittsgehäuse nach Fig. 2.

### Weg zur Ausführung der Erfindung

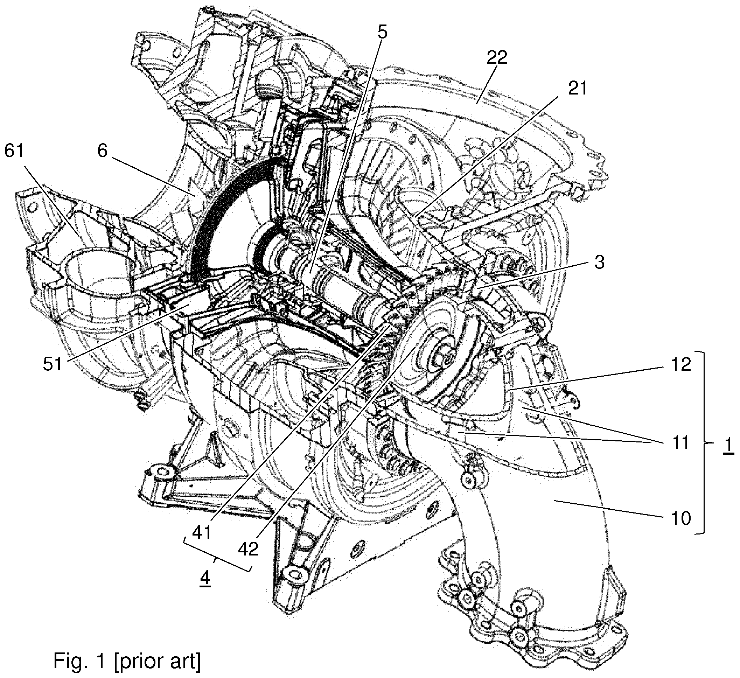

Fig 1. zeigt einen teilweise aufgeschnittenen Abgasturbolader gemäss dem Stand der Technik. Im rechten, vorderen Bereich befindet sich das Turbinenrad 4, welches über die Welle 5 mit dem Verdichterrad 6 verbunden ist. Das Verdichterrad ist in dem Verdichtergehäuse 61 angeordnet. Die Welle 5 ist im Lagergehäuse 51 gelagert.

Das Turbinenrad umfasst eine mit der Welle verbundene Nabe 42 sowie eine Vielzahl von Laufschaufeln 41, welche mit der Nabe verbunden sind. Die Laufschaufeln können form- oder kraftschlüssig mit der Nabe verbunden sein. Alternativ kann das Turbinenrad samt Nabe und Laufschaufeln einteilig ausgebildet sein.

Das Turbinengehäuse umfasst ein Gaseintrittsgehäuse 1, welches das heisse Abgas aus den Brennkammern der Brennkraftmaschine über die Leitvorrichtung 3 auf die Laufschaufeln des Turbinenrades leitet. Stromabwärts des Turbinenrads durchströmt das Abgas einen Diffusor 21 und wird anschliessend im Gasaustrittsgehäuse 22 gesammelt und zur Auspuffanlage geführt.

Das Gaseintrittsgehäuse 1 einer Axialturbine umfasst eine äussere Gehäusewand 10, welche den Strömungskanal radial aussen umfasst. Zusätzlich umfasst das Gaseintrittsgehäuse 1 im inneren Bereich eine haubenförmige, innere Gehäusewand 12, welche die Nabe des Turbinenrades abdeckt und den Abgasstrom aus der rohrförmigen Zuleitung in eine ringrohrförmige Strömung aufteilt. Die äussere Gehäusewand bildet im Übergangsbereich zum Turbineneintritt eine kreisförmige Austrittsöffnung. Zusammen mit der koaxial angeordneten, kreisförmigen Grundflächenaussenkontur der inneren Gehäusewand wird so der ringrohrförmige Strömungskanal begrenzt.

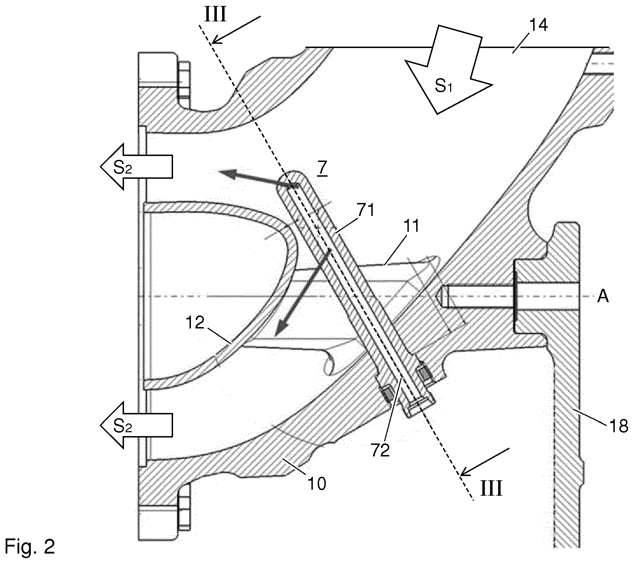

Fig. 2 zeigt einen entlang der Verlängerung der Wellenachse der Abgasturbine geführten Schnitt durch das erfindungsgemäss ausgebildete Gaseintrittsgehäuse mit elliptischem Strömungskanal-Querschnitt und einer eingesetzten Reinigungsdüse 7. Die äussere Gehäusewand 10 ist rohrförmig ausgebildet. Bei der dargestellten radial angeströmten Axialturbine hat das Gaseintrittsgehäuse die Funktion, die Abgasströmung aus einer von der axialen Richtung abweichenden Richtung in die axiale Richtung umzuleiten und zudem die rohrförmige Strömung in eine ringrohrförmige Strömung aufzuteilen.

Für sich alleine betrachtet weist die äussere Gehäusewand 10 im Übergangsbereich zum Turbineneintritt eine kreisförmige Austrittsöffnung auf. Die Gerade, welche senkrecht zur Kreisfläche der kreisförmigen Austrittsöffnung steht und durch deren Mittelpunkt geht, wird fortan als Achse A bezeichnet. Die Achse A entspricht der Wellenachse der mit dem Turbinenrad verbundenen Welle. Koaxial bezüglich der Achse A ist im Innern der äusseren Gehäusewand 10 die haubenförmige, innere Gehäusewand 12 angeordnet. Im Bereich der Austrittsöffnung der äusseren Wand 10 weist die innere Gehäusewand 12 eine ebenfalls kreisförmige Grundflächenaussenkontur auf. Stromaufwärts hingegen verjüngt sich die innere Gehäusewand zu einem abgerundeten Spitz oder einer Kuppe. In diesem Bereich geht der rohrförmige Strömungskanal in einen ringrohrförmigen Strömungskanal über.

Während dem Betrieb der Abgasturbine werden die vor der Brennkraftmaschine kommenden, heissen Abgase zunächst in einem im Querschnitt zumindest annähernd kreisförmigen Abgasstrom S₁ in das Gaseintrittsgehäuse der Axialturbine eingeleitet. Durch die Wirkung der inneren Gehäusewand 12 (Kalotte) erfolgt eine Umwandlung in einen ringförmigen Abgasstrom S₂. Der nunmehr ringförmige Abgasstrom wird über den Strömungskanal zum Turbinenrad 4 weitergeleitet. Dabei hat die stromauf der Laufschaufeln 41 des Turbinenrades angeordnete Leitvorrichtung (Düsenring) 3 die Aufgabe, die Abgase optimal auf die Laufschaufeln 41 des Turbinenrades 4 auszurichten. Das somit angetriebene Turbinenrad sorgt seinerseits über die Welle 5 für den Antrieb des mit ihm verbundenen, nicht dargestellten Verdichters - oder, im Falle einer Nutzturbinenanwendung, einer nicht dargestellten Nutzmaschine, beispielsweise einem elektrischen Generator.

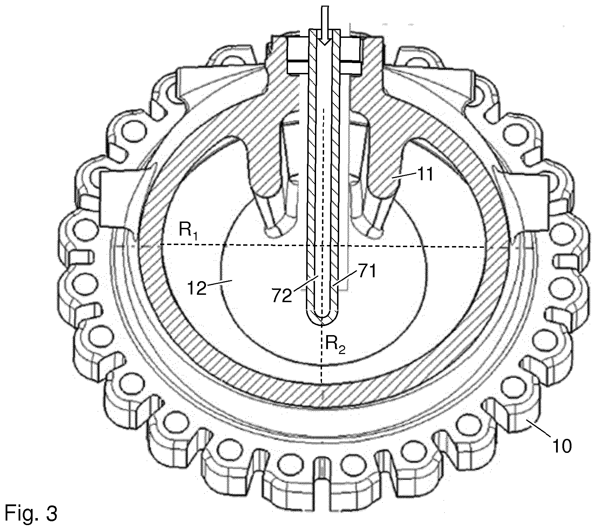

Fig. 3 zeigt einen entlang III-III geführten Schnitt durch den Düsenkörper 7 in welchem der elliptische Querschnitt des Strömungskanals ersichtlich ist. Der Strömungskanal weist im dargestellten Schnitt zwei Symmetrieachsen R₁ und R₂ auf, wobei R₁ die längere Symmetrieachse und R₂ die kürzere Symmetrieachse des elliptischen Querschnitts ist.

Da der Querschnitt des Strömungskanals gegenüber einem kreisrunden Querschnitt in Richtung der kürzeren Symmetrieachse R₂ eine geringere Höhe aufweist, lässt sich auch die Länge der Reinigungsdüse 7 reduzieren.

Die Reinigungsdüse 7, welche von aussen in das Gaseintrittsgehäuse 10 gesteckt wird und in den Strömungskanal hineinragt, weist über der gesamten Länge verteilte, einzelne Düsenbohrungen auf. In der Figur sind diese Bohrungen nicht explizit dargestellt. Die beiden Pfeile in Fig. 2 deuten die Einspritzrichtung der Reinigungsflüssigkeit an, und deuten somit implizit auf die Anordnung und Ausrichtung zweier Bohrungen im Düsenkörper hin. Idealerweise sind mehrere Bohrungen entlang des Düsenkörpers verteilt, und sind je in einem spezifischen Winkel zur Achse des Düsenkörpers ausgerichtet und besitzt darüber hinaus je einen spezifischen Öffnungsdurchmesser, wobei die konkrete Ausführungsform, also etwa geometrische Parameter wie Durchmesser und Ausrichtung der Düsenbohrungen, in Abhängigkeit der jeweiligen, konkreten Strömungskanalgeometrie berechnet und ausgeführt wird. Hierfür wird vorteilhafterweise CFD-Simulationstechnik eingesetzt, um eine möglichst hohe Reinigungswirkung bereits in der Designphase zu bewirken.

### Bezugszeichenliste

- 1: Gaseintrittsgehäuse
- 10: äussere Gehäusewand
- 11: Steg
- 12: innere Gehäusewand (Kalotte)
- 14: Eintrittsöffnung der äusseren Gehäusewand
- 15: Befestigungsflansch
- 18: Stütze
- 21: Diffusor
- 22: Gasaustrittsgehäuse
- 3: Leitvorrichtung
- 4: Turbinenrad
- 41: Laufschaufeln
- 42: Nabe
- 5: Welle
- 51: Lagergehäuse
- 6: Verdichterrad
- 61: Verdichtergehäuse
- 7: Reinigungsdüse
- 71: Düsenkörper
- 72: Zuführkanal im Düsenkörper
- A: Kreisachse der kreisförmigen Austrittsöffnung der äusseren Gehäusewand
- R₁, R₂: Symmetrieachsen des elliptischen Kanalquerschnitts im Bereich der Reinigungsdüse
- S₁, S₂: Abgasstrom

## Patentansprüche

1. Gaseintrittsgehäuse einer Abgasturbine, umfassend eine rohrförmige äussere Gehäusewand (10) mit einer kreisförmigen Austrittsöffnung, sowie eine innerhalb der äusseren Gehäusewand angeordnete, haubenförmige, innere Gehäusewand (12) mit einer kreisförmigen Grundflächenaussenkontur, wobei die innere Gehäusewand (12) mit der kreisförmigen Grundflächenaussenkontur im Bereich der kreisförmigen Austrittsöffnung der äusseren Gehäusewand (10) konzentrisch zu dieser kreisförmigen Austrittsöffnung der äusseren Gehäusewand (10) angeordnete ist;
wobei ein durch die äussere Gehäusewand begrenzter Strömungskanal entlang der inneren Gehäusewand (12) von der Rohrform in die Ringrohrform übergeht;
wobei die äussere Gehäusewand derart gebogen ausgebildet ist, dass der durch die äussere Gehäusewand begrenzte Strömungskanal eine Umlenkung aus einer von der axialen Richtung der Kreisachse (A) der kreisförmigen Austrittsöffnung abweichenden, ersten Richtung in die axiale Richtung erfährt,
wobei eine Reinigungsdüse (7) durch die äussere Gehäusewand (10) geführt ist und in den Strömungskanal hineinragt,
**dadurch gekennzeichnet, dass**
der Strömungskanal im Bereich der Reinigungsdüse einen elliptischen Querschnitt mit einer kurzen Symmetrieachse (R₂) und einer langen Symmetrieachse (R₁) aufweist, und dass die Reinigungsdüse (7) sich entlang der kurzen Symmetrieachse (R₂) des elliptischen Kanalquerschnitts erstreckt.

2. Gaseintrittsgehäuse nach Anspruch 1, wobei die Reinigungsdüse einen Düsenkörper (71) und mehrere, über die Länge des Düsenkörpers (71) verteilte Düsenbohrungen aufweist.

3. Gaseintrittsgehäuse nach Anspruch 2, wobei jede der mehreren Düsenbohrungen jeweils in einem spezifischen Winkel zur Achse des Düsenkörpers verläuft, und gezielt auf einen bestimmten Bereich des Strömungskanals ausgerichtet ist.

4. Gaseintrittsgehäuse nach Anspruch 2 oder 3, wobei jede der mehreren Düsenbohrungen jeweils einen spezifischen Öffnungsdurchmesser aufweist.

## Claims

1. Gas inlet housing of an exhaust-gas turbine, comprising a tubular outer housing wall (10) with a circular outlet opening and comprising a cowling-shaped inner housing wall (12) which is arranged within the outer housing wall and which has a circular base surface outer contour, wherein the inner housing wall (12) with the circular base surface outer contour is, in the region of the circular outlet opening of the outer housing wall (10), arranged concentrically with respect to said circular outlet opening of the outer housing wall (10) ;
wherein a flow duct delimited by the outer housing wall transitions along the inner housing wall (12) from the tubular form into the ring-shaped tubular form;
wherein the outer housing wall is of curved form such that the flow duct delimited by the outer housing wall exhibits a diversion from a first direction, which deviates from the axial direction of the circle axis (A) of the circular outlet opening, into the axial direction,
wherein a cleaning nozzle (7) is led through the outer housing wall (10) and projects into the flow duct,
**characterized in that**
the flow duct has, in the region of the cleaning nozzle, an elliptical cross section with a short axis of symmetry (R₂) and a long axis of symmetry (R₁), and **in that** the cleaning nozzle (7) extends along the short axis of symmetry (R₂) of the elliptical duct cross section.

2. Gas inlet housing according to Claim 1, wherein the cleaning nozzle has a nozzle body (71) and multiple nozzle bores distributed over the length of the nozzle body (71).

3. Gas inlet housing according to Claim 2, wherein each of the multiple nozzle bores respectively runs at a specific angle with respect to the axis of the nozzle body and is oriented in targeted fashion toward a particular region of the flow duct.

4. Gas inlet housing according to Claim 2 or 3, wherein each of the nozzle bores respectively has a specific opening diameter.

## Revendications

1. Boîtier d'entrée de gaz d'une turbine à gaz d'échappement, comprenant une paroi de boîtier extérieure de forme tubulaire (10) avec une ouverture de sortie de forme circulaire, ainsi qu'une paroi de boîtier intérieure (12) en forme de hotte, disposée à l'intérieur de la paroi de boîtier extérieure, avec un contour extérieur de surface de base de forme circulaire, la paroi de boîtier intérieure (12) avec le contour extérieur de surface de base de forme circulaire, dans la région de l'ouverture de sortie de forme circulaire de la paroi de boîtier extérieure (10), étant disposée concentriquement à cette ouverture de sortie de forme circulaire de la paroi de boîtier extérieure (10) ;
un canal d'écoulement limité par la paroi de boîtier extérieure passant d'une forme tubulaire à une forme tubulaire annulaire le long de la paroi de boîtier intérieure (12) ;
la paroi de boîtier extérieure étant réalisée sous forme courbe de telle sorte que le canal d'écoulement limité par la paroi de boîtier extérieure subisse une déviation dans la direction axiale à partir d'une première direction s'écartant de la direction axiale de l'axe du cercle (A) de l'ouverture de sortie circulaire, une buse de nettoyage (7) étant guidée à travers la paroi de boîtier extérieure (10) et pénétrant dans le canal d'écoulement,
**caractérisé en ce que**
le canal d'écoulement présente, dans la région de la buse de nettoyage, une section transversale elliptique avec un axe de symétrie court (R₂) et un axe de symétrie long (R₁), et **en ce que** la buse de nettoyage (7) s'étend le long de l'axe de symétrie court (R₂) de la section transversale de canal elliptique.

2. Boîtier d'entrée de gaz selon la revendication 1, dans lequel la buse de nettoyage présente un corps de buse (71) et plusieurs alésages de buse répartis sur la longueur du corps de buse (71).

3. Boîtier d'entrée de gaz selon la revendication 2, dans lequel chacun de la pluralité d'alésages de buse s'étend à chaque fois suivant un angle spécifique par rapport à l'axe du corps de buse, et est orienté de manière ciblée vers une région déterminée du canal d'écoulement.

4. Boîtier d'entrée de gaz selon la revendication 2 ou 3, dans lequel chacun de la pluralité d'alésages de buse présente à chaque fois un diamètre d'ouverture spécifique.
